# FASCICULE DE BREVET EUROPEEN

(11) **EP 0 346 679 B1**
(45) Date de publication et mention de la délivrance du brevet: **16.06.1993**
(21) Numéro de dépôt: 89109766.9
(22) Date de dépôt: 30.05.1989
(51) Int. Cl.: B60C 23/04

(54) **Fixation sur la jante des composants nécessaires pour surveiller un pneumatique**
Befestigung auf der Felge der notwendigen Teile für die Überwachung eines Reifens
Attachment on the wheel rim for components to monitor a tyre

(30) Priorité: 13.06.1988 FR 8807977
(43) Date de publication de la demande: 20.12.1989
(73) Titulaire: COMPAGNIE GENERALE DES ETABLISSEMENTS MICHELIN-MICHELIN & CIE, F-63000 Clermont-Ferrand (FR)
(72) Inventeur: Pauc, Gilbert, F-63118 Cebazat (FR)
(74) Mandataire: Bauvir, Jacques

(56) Documents cités:
- EP-A- 0 242 297
- DE-A- 3 242 291
- FR-A- 1 413 603
- FR-A- 2 142 001
- FR-A- 2 584 346

## Description

La présente invention concerne la surveillance des pneumatiques. En particulier, elle se rapporte à un ensemble destiné à fixer sur une jante certains des éléments nécessaires à ladite surveillance.

Dans la plupart des dispositifs de surveillance de pneumatique, on trouve un ou plusieurs capteurs, éventuellement associés à des composants électroniques, plongeant dans l'enceinte pneumatique proprement dite, pour être sensibles à la pression régnant à l'intérieur de l'enceinte, et/ou à d'autres paramètres tels que la température. Dans la présente demande, on désignera en général ces éléments par "composants électriques". On trouve également, à l'extérieur de l'enceinte du pneumatique, des moyens pour assurer la liaison avec le véhicule, par exemple une bobine si on utilise le couplage inductif, ou bien tout autre moyen approprié.

Il est nécessaire de réaliser des connexions entre ces composants électriques plongeant à l'intérieur de l'enceinte pneumatique et les moyens de liaisons disposés à l'extérieur de l'enceinte, en général radialement sur la face intérieur de la jante. Dès lors, il est indispensable de réaliser une traversée de jante et dès lors, il est nécessaire d'assurer l'étanchéité à ce niveau.

Par ailleurs, les contraintes industrielles imposent de concevoir une fixation des composants électriques sur la jante aussi simple et fiable que possible.

L'encombrement de l'espace situé à l'intérieur de la jante par les organes de freinage et par les articulations et/ou éléments de suspension est tel que toute protubérance radialement vers l'intérieur de la jante est proscrite.

On connaît des supports dont l'embase sur la jante ressemble à une embase de valve : un joint de caoutchouc entoure le percement et appuie sur les deux faces intérieure et extérieure dela jante (voir par exemple la demande de brevet FR 2 597 411). Une telle fixation est encombrante du côté radialement intérieur de la jante. On connaît aussi les fixations du genre vis et écrou. On dispose en général un joint du côté radialement intérieur de la jante. Cela pose le même problème d'encombrement et on est donc conduit à reporter le joint d'étanchéité radialement à l'intérieur de la jante, donc à l'intérieur de l'enceinte pneumatique. Il faut alors comprimer le joint entre trois pièces : la jante, la pièce équivalent à la vis et la pièce équivalent à l'écrou. Cela pose des problèmes de tolérancement et donc de fiabilité.

L'objectif de la présente invention est de proposer un ensemble pour la fixation sur la jante qui soit peu encombrant à l' extérieur de l'enceinte pneumatique et dont le prix de revient, placé sur la jante, soit aussi bas que possible.

Selon l'invention, l'ensemble destiné à maintenir sur une jante les composants électriques nécessaires pour surveiller l'état d'un pneumatique, et à assurer l'étanchéité requise entre l'enceinte pneumatique et l'extérieur, ledit ensemble comportant un support constitué d'un fût et d'une tête, les composants électriques étant incorporés dans ce fût qui, en position de montage, pénètre à l'intérieur de l'enceinte pneumatique, la tête venant en appui contre la face de la jante extérieure à l'enceinte pneumatique pour assurer le blocage du support dans la direction de son axe et dans le sens dirigé vers l'intérieur de l'enceinte pneumatique, la retenue du support dans le sens dirigé vers l'extérieur de l'enceinte pneumatique étant assurée par un élément de blocage entourant le fût, est caractérisé en ce que les moyens d'étanchéité sont solidaires de l'élément de blocage et sont disposés de façon à assurer l'étanchéité entre l'élément de blocage et le fût d'une part et entre l'élément de blocage et la jante d'autre part.

Les figures jointes illustrent les pièces constituant l'ensemble, pour la première figure, et l'ensemble monté sur la jante, pour la seconde figure.

On aperçoit que l'ensemble comporte un support 1 et un élément de blocage 2. Le support 1 est constitué d'un fût 10 terminé d'un côté par une tête 11. Le fût 10 délimite une cavité dans laquelle sont incorporés tous les composants électriques. La tête 11 forme une butée mécanique capable de bloquer le déplacement du support dans un sens, tout comme la tête d'un boulon.

Les moyens d'étanchéité sont tous solidaires de l'élément de blocage 2. Le nombre de pièces de l'ensemble est donc réduit, ce qui facilite l'implantation sur la jante. Afin de limiter l'encombrement de l'ensemble hors de l'enceinte pneumatique, ces moyens d'étanchéité sont reportés à l'intérieur de l'enceinte. L'étanchéité est assurée d'un part contre le fût 10 et d'autre part contre la jante alors que l'immobilisation mécanique est garantie par la tête dans un sens et par l'élément de blocage dans l'autre sens, celui-ci coopérant bien sûr avec le fût. Dans l'illustration de l'invention, la liaison du fût 10 et de l'élément de blocage 2 est assurée par un clip 25 s'engageant dans une rainure 101 creusée sur le fût 10. Cependant, une liaison à frottement peut suffire pour compenser la force d'éjection résultant de la pression de gonflage et de la force centrifuge sur l'élément de blocage 2. On peut également envisager un blocage par boulon. Un blocage par clip permet un contrôle du montage dans de meilleures conditions. Les faces qui assurent l'appui du support sur la jante peuvent être fermes puisque elles ne doivent pas assurer de fonction d'étanchéité. L'immobilisation du support sur la jante est donc excellente alors que dans les supports où le même élément assure l'échanchéité et l'appui, les vibrations et/ou la force centrifuge peuvent provoquer des basculements des supports qui eux-même entrainent des ruptures d'étanchéité. On a constaté qu'il est fort avantageux de bien séparer les fonctions d'immobilisation sur la jante et d'étanchéité. En effet, la sollicitation mécanique des joints d'étanchéité altère, au cours du temps, leurs performances d'étanchéité.

Les moyens d'étanchéité utilisés ici sont constitués par deux lèvres 21 et 22 dont l'une 21 est solidaire de la tranche supérieure 23 de l'élément de blocage 2, et dont l'autre 22 est solidaire de la face cylindrique extérieure 24 de l'éléments de blocage. La première 21 de ces lèvres est destinée à reposer sur le fût 10 du support 1 et la seconde 22 est destinée à reposer sur la jante 3. La première lèvre 21 assure donc l'étanchéité entre le fût 10 et l'élément de blocage 2, et la seconde 22 entre l'élément de blocage 2 et la jante 3. La pression de gonflage elle-même renforce l'étanchéité ainsi réalisée parce qu'elle agit sur une seule face des lèvres. De plus, les lèvres 21 et 22 étant facilement déformables, elles épousent très bien de petites variations de planéïté. Ceci est très avantageux pour la lèvre 22 agissant sur la jante 3. Contrairement à une disposition faisant appel à un joint d'étanchéité classique, il n'est pas ici nécessaire d'effectuer une préparation quelconque de la surface 30 de la jante 3 sur laquelle la lèvre 22 appuie : celle-ci peut rester tronconique comme elle l'est naturellement, alors que dans le cas d'un joint d'étanchéité agissant par exemple entre la tête 11 et la jante 3, il faudrait aplanir la portée du joint sur la jante 3, ce qui impose une opération supplémentaire sur la jante, ou bien de prévoir un joint d'épaisseur suffisante pour supporter un écrasement non homogène tout en assurant l'étanchéité. De plus, de telles lèvres 21, 22 surmoulées sur l'élément de blocage 2 conduisent à un système de blocage et d'échanchéité simple et peu encombrant.

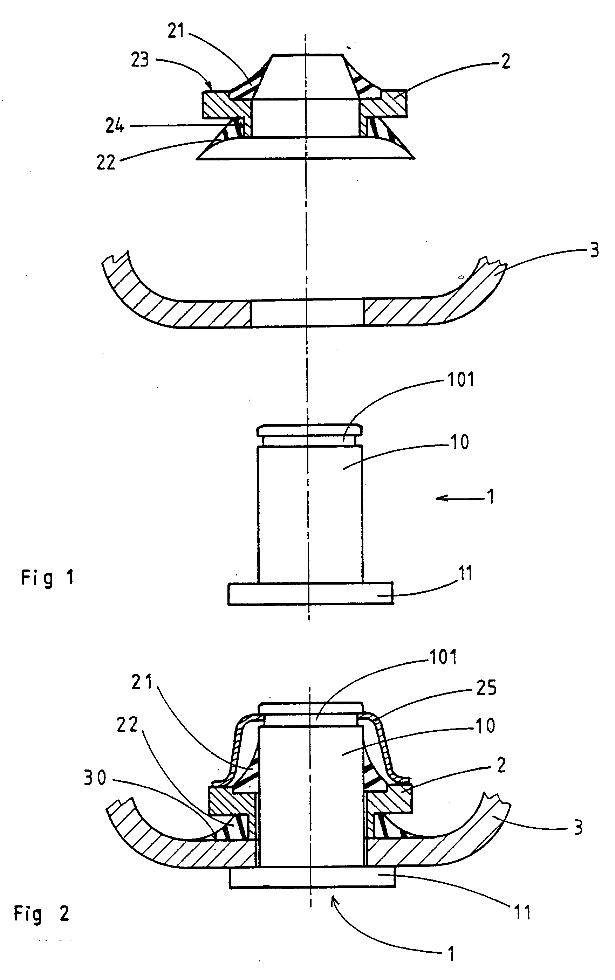

On peut réaliser une précontrainte des lèvres 21, 22 pour favoriser la prise d'étanchéité en conformant celles-ci pour qu'elles appuient, après montage, sur les faces avec lesquelles elles doivent coopérer, comme on le voit en comparant les figures 1 et 2.

On voit donc que la solution proposée par la présente invention est très avantageuse : on simplifie la préparation de la jante et la mise en place de l'ensemble sur la jante 3 grâce à une conception judicieuse de l'élément de blocage 2. Celui-ci peut être réalisé très économiquement par exemple par surmoulage sur une rondelle, ou sur un écrou ou autre, selon la solution retenue pour le contact entre fût 1 et élément de blocage 2.

## Revendications

1. Ensemble destiné à maintenir sur une jante les composants électriques nécessaires pour surveiller l'état d'un pneumatique, et à assurer l'étanchéité requise entre l'enceinte pneumatique et l'extérieur, ledit ensemble comportant un support (1) constitué d'un fût (10) et d'une tête (11) , les composants électriques étant incorporés dans ce fût qui, en position de montage, pénètre à l'intérieur de l'enceinte pneumatique, la tête (11) venant en appui contre la face de la jante (3) extérieure à l'enceinte pneumatique pour assurer le blocage du support dans la direction de son axe et dans le sens dirigé vers l'intérieur de l'enceinte pneumatique, la retenue du support (1) dans le sens dirigé vers l'extérieur de l'enceinte pneumatique étant assurée par un élément de blocage (2) entourant le fût (10), caractérisé en ce que les moyens d'étanchéité sont solidaires de l'élément de blocage (2) et sont disposés de façon à assurer l'étanchéité entre l'élément de blocage (2) et le fût (10) d'une part et entre l'élément de blocage (2) et la jante (3) d'autre part.

2. Ensemble selon la revendication 1, caractérisé en ce que lesdits moyens d'étanchéité sont constitués chacun par une lèvre (21 et 22), l'une (21) de ces lèvres étant solidaire de la tranche supérieure (23) de l'élément de blocage (2) et étant destinée à reposer sur le fût (10), l'autre (22) de ces lèvres étant solidaire de la face cylindrique extérieure (24) de l'élément de blocage (2) et étant destinée à reposer sur la jante (3).

## Claims

1. A unit designed to maintain electric components on a wheel rim and to provide a required seal between a tire enclosure and the outside, said electric components being necessary for monitoring the state of said tire, said unit comprising a support (1) having a shaft (10) and a head (11), the electric components being incorporated in said shaft which, in an assembled position, penetrates inside the tire enclosure with said head (11) resting against the face of the wheel rim (3) outside the tire enclosure to assure locking of the support in a direction of its axis and in a direction toward the inside of the tire enclosure, the retention of the support in a direction toward the outside of the tire enclosure being due to a locking element (2) surrounding said shaft (10), characterized by the fact that the sealing means are connected to said locking element (2) and are placed to assure the seal between the locking element (2) and the shaft (10) on one hand and between the locking element (2) and the wheel (3) on the other hand.

2. A unit according to claim 1, characterized by the fact that sealing means comprises two lips (21 and 23), onet(21) of said lips being integral with an upper sectiont(23) of said locking element (2) and resting on said shaft (10), the other (22) of said lips being integral with an outside cyclindrical face (24) of said lockingelement (2) and resting on said wheel rim (3).

## Patentansprüche

1. Einheit zur Halterung der für die Überwachung des Zustands eines Luftreifens nötigen elektrischen Bauteile und zur Sicherstellung der erforderlichen Dichtigkeit zwischen der Luftkammer und der äußeren Umgebung auf einer Felge, die einen Träger (1) aufweist, der aus einem Schaft (10) und einem Kopf (11) besteht, wobei die elektrischen Bauteile in diesem Schaft vorgesehen sind, der in eingebautem Zustand in das Innere der Luftkammer ragt, der Kopf (11) an der außerhalb der Luftkammer liegenden Fläche der Felge (3) anliegt, um eine sichere Festlegung des Trägers in Richtung seiner Achse und im gegen das Innere der Luftkammer gerichteten Sinn zu gewährleisten und die Halterung des Trägers (1) im von der Luftkammer nach außen gerichteten Sinn durch ein Feststellelement (2), das den Schaft (10) umgibt, sichergestellt ist,
dadurch gekennzeichnet,
daß die Dichtungsmittel mit dem Feststellelement (2) fest verbunden und so vorgesehen sind, daß sie die Dichtigkeit zwischen dem Feststellelement (2) und dem Schaft (10) auf der einen Seite und zwischen dem Feststellelement (2) und der Felge (3) auf der anderen Seite sicherstellen.

2. Einheit nach Anspruch 1,
dadurch gekennzeichnet,
daß die Dichtungsmittel jeweils durch eine Lippe (21 und 22) gebildet werden, wobei eine der Lippen (21) mit der oberen Platte (23) des Feststellelements (2) fest verbunden ist und zur Anlage auf dem Schaft (10) vorgesehen ist und die andere Lippe (22) mit der äußeren zylindrischen Fläche (24) des Feststellelements (2) fest verbunden ist und zur Anlage auf der Felge (3) vorgesehen ist.
